(19) Europäisches Patentamt
European Patent Office
Office européen des brevets

(11) Veröffentlichungsnummer: **0 006 568**
**A1**

(12) # EUROPÄISCHE PATENTANMELDUNG

(21) Anmeldenummer: **79102020.9**

(51) Int. Cl.³: **C 08 K 5/00**

(22) Anmeldetag: **19.06.79**

(30) Priorität: **24.06.78 DE 2827867**

(43) Veröffentlichungstag der Anmeldung: **09.01.80**
**Patentblatt 80/1**

(84) Benannte Vertragsstaaten: **BE DE FR GB IT NL**

(71) Anmelder: **HOECHST AKTIENGESELLSCHAFT,**
**Zentrale Patentabteilung Postfach 80 03 20, D-6230 Frankfurt/Main 80 (DE)**

(72) Erfinder: **Herwig, Walter, Dr., Hasenpfad 7, D-6232 Bad Soden am Taunus (DE)**
Erfinder: **Kleiner, Hans-Jerg, Dr., Altkönigstrasse 11a, D-6242 Kronberg/Taunus (DE)**
Erfinder: **Sabel, Hans-Dieter, Dr., Ostring 24, D-6231 Schwalbach (DE)**

(54) **Flammschutzmittel und ihre Verwendung zur Herstellung schwerentflammbarer Thermoplasten.**

(57) Die Erfindung betrifft Gemische aus
1) einer Phosphinsäure oder Diphosphinsäure oder Phosphonsäure oder Diphosphonsäure oder einem Alkali-, Erdalkali- oder Erdmetallsalz oder einem anderen Derivat dieser Säuren, und
2) Melamin und/oder Dicyandiamid und/oder Guanidin als Flammschutzmittel für Kunststoffe.

EP 0 006 568 A1

HOECHST AKTIENGESELLSCHAFT HOE 78/F 129 Dr.EL/cr

**Flammschutzmittel und ihre Verwendung zur Herstellung schwerentflammbarer Thermoplasten**

Die meisten thermoplastischen Kunststoffe sind, wenn sie einer Zündquelle ausgesetzt werden, brennbar. Der Gesetzgeber verlangt jedoch bei vielen Einsatzgebieten nicht brennbare oder nach bestimmten Normen schwerentflammbare Kunststoffe. Seit langem wird nach Methoden gesucht, brennbare thermoplastisch verarbeitbare Kunststoffe schwerentflammbar auszurüsten. Zahlreich sind die Versuche, durch Zuschläge verschiedenster Art dieses Ziel zu erreichen.

Viele dieser Zusätze haben erhebliche Nachteile: ungünstige Beeinflussung der mechanischen Eigenschaften der polymeren Matrix, Toxizität und Umweltprobleme bei der Zersetzung und Verbrennung vor allem mit halogenhaltigen Zusätzen ausgerüsteter Kunststoffe, Verarbeitungsschwierigkeiten der Thermoplaste wegen ungenügender thermischer Belastbarkeit, unerwünschte Verfärbung usw.

Häufig bestehen die technisch bekannten Zusätze aus Kombinationen, für die synergistische Effekte genannt werden, z.B. Halogenaromaten plus Antimonoxid oder aliphatische Bromverbindungen plus Peroxide.

Es wurde nun gefunden, daß Kohlenstoffverbindungen des Phosphors (im nachfolgenden kurz [P] genannt) mit der allgemeinen Formel

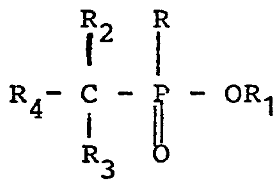

in Kombination mit Stickstoffbasen [N], nämlich Melamin und/oder Dicyandiamid und/oder Guanidin, Flammschutzadditive mit ausgezeichneter Wirkung bei zahlreichen thermoplastischen Kunststoffen sind.

Gefunden wurden Flammschutzmittel für Kunststoffe, bestehend aus einem Gemisch von

1) Kohlenstoffverbindungen des Phosphors ([P]) mit den allgemeinen Formeln

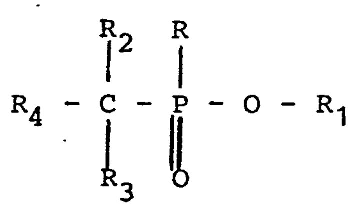

(1)

oder

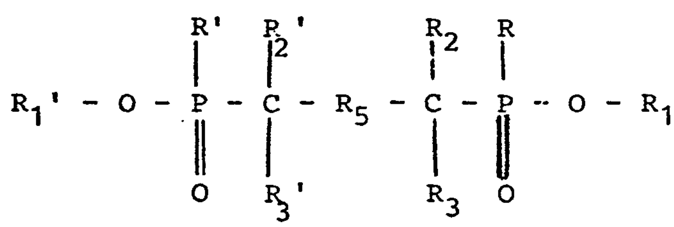

(2)

worin
R und R' jeweils eine OH-Gruppe, oder
eine $OMe^{\frac{1}{n}}$-Gruppe, oder

eine Alkoxy-Gruppe mit 1 bis 6 C-Atomen, vorzugsweise Methoxy- oder Äthoxy-Gruppe, oder
eine geradkettige oder verzweigte Alkylgruppe mit 1 bis 6 C-Atomen, vorzugsweise Methyl- oder Äthylgruppe, oder
eine Arylgruppe mit 6 bis 10 C-Atomen, vorzugsweise Phenylgruppe, oder
eine Aralkylgruppe mit 7 bis 15 C-Atomen, vorzugsweise Benzylgruppe,

$R_1$ und $R_1'$ jeweils Wasserstoff, oder
$Me^{\frac{1}{n}}$, oder
eine geradkettige oder verzweigte Alkylgruppe mit 1 bis 6 C-Atomen, oder
eine Aralkylgruppe mit 7 bis 15 C-Atomen,

$R_2$ und $R_2'$ jeweils Wasserstoff, oder
eine Alkylgruppe mit 1 bis 6 C-Atomen, vorzugsweise Methyl- oder Äthylgruppe,

$R_3$ und $R_3'$ jeweils Wasserstoff, oder
eine Alkylgruppe mit 1 bis 6 C-Atomen, vorzugsweise Methyl- oder Äthylgruppe,

$R_4$ Wasserstoff, oder
eine geradkettige oder verzweigte Alkylgruppe mit 1 bis 30 C-Atomen, oder
eine Aralkylgruppe mit 7 bis 30 C-Atomen, oder
eine $-R_6-COOR_7$gruppe,

$R_5$ eine einfache chemische Bindung, oder
eine Alkylengruppe mit 1 bis 10 C-Atomen,

$R_6$ eine Alkylengruppe mit 1 bis 4 C-Atomen,

$R_7$ Wasserstoff, oder
$Me^{\frac{1}{n}}$, oder
eine Alkylgruppe mit 1 bis 6 C-Atomen,

Me ein Alkalimetall, vorzugsweise Natrium oder Kalium, oder
ein Erdalkalimetall, vorzugsweise Magnesium

oder Calzium, oder
ein Erdmetall, vorzugsweise Aluminium, und
n die Wertigkeit des Metalls Me
bedeuten, und

2) einer Stickstoffbase [N] oder einem Gemisch dieser Stickstoffbasen, nämlich Melamin und/oder Dicyandiamid und/oder Guanidin,
in einem molaren Mengenverhältnis von
[P] : [N] = 1 : 0,5 bis 1 : 6, vorzugsweise 1 : 0,7 bis 1 : 4, wenn [P] eine Verbindung der Formel (1) ist, bzw.
[P] : [N] = 1 : 1 bis 1 : 12, vorzugsweise 1 : 1,4 bis 1 : 8, wenn [P] eine Verbindung der Formel (2) ist.

Mit den erfindungsgemäßen Gemischen aus [P] und [N] lassen sich viele Thermoplaste flammfest oder schwerentflammbar ausrüsten, z.B. Polyäthylen, Polypropylen, Polyamide, Polystyrol oder Polyoxymethylen.

Die zuzusetzenden Mengen an den erfindungsgemäßen Gemischen aus [P] und [N] können in breiten Grenzen von 5 bis 50 Gew.-%, vorzugsweise 5 bis 30 Gew.-%, bezogen auf den Thermoplasten, variiert werden, und zwar in Abhängigkeit von dem gewählten Thermoplasten und dem gewünschten oder geforderten Grad des Flammschutzes.

Beispiele von als Phosphorverbindungen [P] in den erfindungsgemäßen Gemischen einsetzbaren Verbindungen sind:

Phosphinsäuren und ihre Na-,K-, Mg- und Ca-Salze:

Dimethylphosphinsäure, Methyläthylphosphinsäure, Methylpropylphosphinsäure, Methylhexylphosphinsäure,

Diäthylphosphinsäure, Äthylphenylphosphinsäure, Äthan-1,2-di-(methylphosphinsäure), Äthan-1,2-di-(äthylphosphinsäure), Äthan-1,2-di-(phenylphosphinsäure), Butan-1,4-di-(methylphosphinsäure),2-Carboxyäthylmethylphosphinsäure.

Phosphonsäuren und ihre Na-,K-,Mg- und Ca-Salze: Propylphosphonsäure, 2,3-Dimethylbutylphosphonsäure, 2-Methylpentylphosphonsäure, 2,2,4-Trimethylpentylphosphonsäure, Octylphosphonsäure.

Die erfindungsgemäß einzusetzenden Phosphin- und Phosphonsäuren und ihre Salze werden nach literaturbekannten Verfahren hergestellt. Wir verweisen dazu auf HOUBEN-WEYL, Methoden der Organischen Chemie, Band 12, Teil 1, Stuttgart 1963, und KOSOLAPOFF, Organic Phosphorus Compounds, Band 4, New York 1972, und Band 7, New York 1976, sowie auf die in den DE-PSen 24 41 783 und 24 41 878 beschriebenen neueren Verfahren.

Zur Herstellung der erfindungsgemäßen schwerentflammbaren Kunststoff-Formmassen geht man zweckmäßig aus von einem Kunststoff-Pulver oder Kunststoff-Granulat.

Man kann die [P]-[N]-Gemische dem Kunststoff-Pulver bzw. -Granulat in einem geeigneten Mischer zumischen und diese Mischungen beispielsweise auf einer Spitzgießmaschine direkt zu fertigen Formteilen verspritzen.

Im allgemeinen wird es aber zweckmäßiger sein, die Mischung aus Kunststoff-Pulver bzw. -Granulat und dem [P]-[N]-Gemisch in einem separaten Schritt in einem passenden Extruder aufzuschmelzen und zu homogenisieren. Hierzu sind verschiedene technische Varianten möglich.

Man kann die /¯P_7- und die /¯N_7-Komponenten in Pulver-Form vormischen und dem geschmolzenen Kunststoff-Granulat oder -Pulver vor oder während der Extrusion zusetzen.

Dieses Vormischen der /¯P_7- und /¯N_7-Komponenten ist aber in vielen Fällen nicht nötig. Man kann dem den Thermoplasten aufschmelzenden Extruder die /¯P_7- und die /¯N_7-Komponente über separate Rinnen gleichzeitig zudosieren; man kann aber auch zunächst die /¯N_7-Komponente zudosieren und eine beispielsweise flüssige /¯P_7 -Komponente an einer anderen Stelle des Extruders zupumpen.

Werden in einem separaten Schritt, z.B. in einem Lösungsmittel wie $H_2O$ oder Alkohol, zunächst aus Melamin oder einem Guanidinsalz mit z.B. einer Alkyl-Phosphin- oder -Phosphonsäure definierte Addukte hergestellt, so können diese allein oder im Rahmen der unten beschriebenen Möglichkeiten zusammen mit weiteren /¯N_7 -Anteilen in die Thermoplasten eingearbeitet werden.

Wichtig ist dabei in allen Fällen, daß die thermische Beständigkeit der Additive die erforderlichen Verarbeitungstemperaturen der Thermoplasten nicht unterschreitet, und daß durch entsprechende /¯P_7 - /¯N_7-Kompositionen eine chemische Wechselwirkung mit dem Thermoplasten während dieser Verarbeitung, was ja zu einem Abbau des Polymeren führen könnte, weitgehend vermieden wird. Wird beispielsweise Polyamid-6 mit dem Melamin-Addukt einer Alkylphosphonsäure aufgeschmolzen, erhält man eine stabile Polymerschmelze vor allem dann, wenn eine zweite, zum Melamin ungefähr moläquivalente Menge Melamin der Mischung zugesetzt wird. Ähnliches gilt für Polyoxymethylen, hier ist besonders darauf zu achten, daß das Polymere nicht mit Mischungen überschüssiger Säuregruppierungen umgesetzt wird.

Melamin und Dicyandiamid können unabhängig von /¯P_7 zu jedem beliebigen Zeitpunkt dem flammfest zu machenden Thermoplasten zugesetzt werden. Man kann aber auch, z.B. wenn $R_1$ bzw. $R_1'$ = H ist, zunächst ein [P]-[N]-Addukt herstellen und als solches oder nach Zumischung von weiterem [N] oder [P] einsetzen.

Im Falle von Guanidin ist nur die Verwendung definierter, separat hergestellter [P]-[N]-Addukte möglich. Aber auch diese Addukte können mit zusätzlichem Melamin oder Dicyandiamid vor ihrer Einarbeitung in den Thermoplasten abgemischt werden.

Beispiele für erfindungsgemäß einsetzbare Addukte sind:

Methyläthylphosphinsäure-Melamin-Addukt im molaren Verhältnis 1 : 1, Methyläthylphosphinsäure-Guanidin-Addukt im molaren Verhältnis 1 : 1, Methylpropylphosphinsäure-Guanidin-Addukt im molaren Verhältnis 1 : 1, 2-Carboxyäthylmethylphosphinsäure-Melamin-Addukt im molaren Verhältnis 1 : 1, Propylphosphonsäure-Guanidin-Addukt im molaren Verhältnis 1 : 1, Octylphosphonsäure-Melamin-Addukt im molaren Verhältnis 1 : 1, Octylphosphonsäure-Guanidin-Addukt im molaren Verhältnis 1 : 1, Äthan-1,2-di-(methylphosphinsäure)-Melamin-Addukt im molaren Verhältnis 1 : 2, Äthan-1,2-di-(methylphosphinsäure)-Guanidin-Addukt im molaren Verhältnis 1 : 2.

Zusätzlich zu den erfindungsgemäßen [P]-[N]-Gemischen können auch noch bekannte flammhemmende Zusätze, vorzugsweise Aluminiumoxidhydrat oder roter Phosphor, mit verwendet werden.

Die erfindungsgemäßen Formmassen können auch noch andere Zusatzstoffe enthalten, z.B. Glasfasern, Talk oder Ruß, ferner UV- und Wärme-Stabilisatoren, Gleitmittel, Antistatika, Farbstoffe.

## Beispiele

### Beispiel 1

Beispielhafte Beschreibung der Herstellung einiger erfindungsgemäß einsetzbarer Verbindungen [P] bzw. [P] + [N]:

a) Magnesiumsalz der Methyl- äthyl-phosphinsäure (diese wurde hergestellt nach DE-PS 24 41 783, Beispiel 3) 864 g (8 Mol) Methyläthylphosphinsäure wurden in 4 Liter Wasser gelöst. Die Lösung wurde auf dem Dampfbad erhitzt und portionsweise mit insgesamt 232 g (4 Mol) Magnesiumhydroxid (Merck reinst) versetzt, die gebildete klare Lösung mit 5 g überschüssigem Magnesiumhydroxid versetzt, nach weiterem 30 minütigem Erhitzen filtriert und das Filtrat zur Trockene gebracht. Der feste Rückstand wurde im Trockenschrank bei 100°C und 13 mbar getrocknet.

Man erhielt 995 g (99,5 % der Theorie) analysenreines Magnesiumsalz. Das Salz schmilzt zwischen 180 und 190°C zu einer farblosen, klaren Schmelze, die sich bis 300°C ohne Veränderung erhitzen läßt.

b) Calziumsalz der Octanphosphonsäure (diese wurde hergestellt nach DE-PS 24 41 783, Beispiel 5) 41,8 g (0,215 Mol) Octanphosphonsäure wurden in wässriger Natronlauge (17,2 g, 0,430 Mol NaOH in 250 g $H_2O$) gelöst. Diese Lösung tropfte man langsam zu einer wässrigen Lösung von 31,6 g (0,215 Mol) $CaCl_2 \cdot 2\ H_2O$ in 1 Liter Wasser. Der gebildete weiße, kristalline Niederschlag wurde abfiltriert und mit Wasser Chlor-Ionen-frei gewaschen. Nach Trocknen im Vacuum erhielt man 49,9 g reines Calziumsalz.

c) Melamin-Addukt der Äthan-1,2-di-(methylphosphinsäure) im molaren Verhältnis [P] : [N] = 1 : 2.

186 g Äthan-1,2-di-(methylphosphinsäure) (1 Mol) wurden in 3 Liter heißem Wasser gelöst und zu einer Lösung von 252 g Melamin (2 Mol) in 4 Liter kochendem Wasser gegeben. Beim Abkühlen der klaren Lösung fiel das Addukt in farblosen, nadelförmigen Kristallen aus. Nach völligem Erkalten des Reaktionsgutes wurde die Kristallmasse abgesaugt, mit eiskaltem Wasser gewaschen und bei 100°C im Vakuum getrocknet.

Ausbeute: 426 g (97 % d.Th.).

| Analyse: | theor. | gefunden |
|---|---|---|
| | C 27,4 % | 27,2 / 27,5 % |
| | H 5,5 % | 5,5 / 5,6 % |
| | N 38,4 % | 38,2 / 38,2 % |
| | P 14,15 % | 14,0 / 13,8 % |

d) Guanidin-Addukt der Methyl-äthyl-phosphinsäure im molaren Verhältnis [P] : [N] = 1 : 1.
864 g Methyläthylphosphinsäure (8 Mol) wurden in 1,5 Liter Äthanol gelöst. Man trug in die zum Sieden erhitzte Lösung langsam 728 g Guanidincarbonat (4 Mol) ein. Nach Beendigung der $CO_2$-Entwicklung wurde die klare Lösung eingeengt und das ausfallende Kristallisat in der Kälte abgesaugt und getrocknet.

Ausbeute: 958 g (84 % d.Th.).

| Analyse: | theor. | gefunden |
|---|---|---|
| | C 28,6 % | 28,2 / 28,2 % |
| | H 8,9 % | 8,1 / 8,1 % |
| | N 25,0 % | 25,9 / 25,9 % |

Beispiel 2

Herstellung der Prüfkörper für Brenntests:

a) Herstellung der Prüfkörper mit kleinen Substanzmengen

In einer beheizbaren Knetkammer aus Edelstahl mit einem Fassungsvermögen von 50 ml wurden die zu prüfenden Mischungen des pulvrigen Thermoplasten und der erfindungsgemäßen Additive in einer Gesamtmenge von 25 g oberhalb des Erweichungspunktes des Thermoplasten fünf bis zehn Minuten homogenisiert. Nach Öffnung der Kammer wurde die noch weiche Masse entnommen, die nach Erkalten in einer Schneid-Mühle gemahlen wurde. Die Körner des Gutes waren dabei nicht größer als 1 mm. Von diesem Mahlgut wurden mit Hilfe einer Messingform in einer beheizbaren Laborpresse Prüfkörper von den Maßen 127 mm x 12,7 mm x 1,6 mm gepreßt. Diese Prüfstäbe wurden nach ASTM D 635 - 74 und/oder nach UL (Underwriters' Laboratories) 94, Vertical Burning Test for Classifying Materials 94 V-O, 94 V-1 oder 94 V-2 geprüft.

b) Herstellung und Prüfung größerer Substanzmengen

Zur Herstellung von spritzgegossenen Prüfkörpern zur Brandprüfung und/oder zur mechanischen Prüfung wurden die trockenen Pulver- und Granulatmischungen der Thermoplasten mit den Additiven in einem Zweiwellen-Extruder homogenisiert, der ausgetragene Strang granuliert und das Granulat getrocknet. Bei besonders gut rieselfähigen Komponenten konnte auf das vorherige Mischen verzichtet werden. Die Komponenten wurden über Dosierrinnen oder Bandwaagen dem Extruder direkt zudosiert. Flüssigkomponenten wurden gesondert mittels Dosierpumpen zudosiert. Teilweise genügte es aber auch, die Pulvermischungen ohne vorhergehenden Extrusionsschritt direkt in einer Spritzgießmaschine zu den gewünschten Prüfkörpern zu verspritzen. Die erhaltenen Prüfkörper wurden analog zu denen von Beispiel 2a nach ASTM D 635-74 und/oder nach UL 94 geprüft.

Beispiele 3 bis 33

Die Tabellen 1 bis 4 führen Brandtestwerte nach ASTM D 635-74 bzw. UL-94, die Tabelle 5 mechanische Prüfwerte für verschiedene erfindungsgemäße Mischungen auf.

Die Dehnung bei Reißkraft und die Streckspannung wurden nach DIN 53 455,
die Schlagzugzähigkeit $a_{zn}$ nach DIN 53 448,
die Schlagzähigkeit $a_n$ und die Kerbschlagzähigkeit $a_k$ nach DIN 53 453,
die Kugeldruckhärte (KDH) nach DIN 53 456 und
der Zeitstand-Biege-E-Modul aus dem Dreipunkt-Biegeversuch (statisch) mit Normkleinstab und der Versuchsanordnung nach DIN 53 452 (Entwurf April 1975) bei einer Randfaserdehnung von etwa 1 % und 1 Minute Meßzeit ermittelt.

Als Thermoplaste wurden verwendet:
Polyamid-6: RSV = 1,9 dl/g, gemessen bei 25°C an einer Lösung von 1 g in 100 ml eines Gemisches von 3 Gew.-Teilen Phenol + 2 Gew.-Teilen Tetrachloräthan.

Polyoxymethylen: Schmelzindex $i_2$ = 9 g /10' (190°C)
Polystyrol: RSV = 1,1 dl/g, gemessen bei 25°C an einer Lösung von 1 g in 100 ml Toluol
Polypropylen: Schmelzindex $i_5$ = 5-10 g/10' (230°C)

In den Vergleichsbeispielen 31 bis 33 wurden die mechanischen Eigenschaften von Polyoxymethylen bzw. von Polystyrol bzw. von Polypropylen ermittelt, jeweils ohne die erfindungsgemäßen Zusätze. Diese drei unausgerüsteten Kunststoffe brannten nach dem Beflammen restlos ab.

Tabelle 1: Brandverhalten von erfindungsgemäß ausgerüstetem Polyamid-6 (PA-6)

| Beispiel | PA-6 Menge | Flammschutzmittel Art | Flammschutzmittel Menge | Prüfkörperherst. nach Beispiel | Brandprüfung nach ASTM D 635 | UL-94 |
|---|---|---|---|---|---|---|
| 3 | | -(Vergleichsbeispiel) | -- | 2b | brennbar | nicht bestanden |
| 4 | 1,8 kg | Äthan-1,2-di-(methyl-phosphinsäure)/Melamin-Addukt-([P]:[N]= 1:2) | 0,2 kg | 2 b | selbstverlöschend | V-O |
| 5 | 1,8 kg | Propylphosphonsäure/Melamin-Addukt ([P] :[N]= 1 : 1) | 0,2 kg | 2b | selbstverlöschend | V-O |
| 6 | 1,8 kg | 2-Carboxyäthyl-methylphosphinsäure/Melamin-Addukt ([P] :[N]= 1 : 1) | 0,2 kg | 2b | selbstverlöschend | V-O |
| 7 | 1,9 kg | Mg-Salz der Octylphosphons.<br>Melamin | 0,08 kg<br>0,02 kg | 2b | selbstverlöschend | V-2 |
| 8 | 1,9 kg | Ca-Salz der Octylphosphons.<br>Melamin | 0,08 kg<br>0,02 kg | 2b | - | V-2 |

Tabelle 2: Brandverhalten von erfindungsgemäß ausgerüstetem Polyoxymethylen (POM)

| Beispiel | POM Menge | Flammschutzmittel Art | Menge | Prüfkörperherst. nach Beispiel | Brandprüfung nach ASTM D-635 | UL-94 |
|---|---|---|---|---|---|---|
| 9 | 17,5 g | Methylpropylphosphinsäure Guanidin-Addukt ([P]:[N] = 1 : 1) | 7,5g | 2a | selbstverlöschend | V-O |
| 10 | 17,5g | Äthan-1,2-di-(methylphosphinsäure)/Guanidin-Addukt ([P]:[N] = 1:2) | 7,5 g | 2a | selbstverlöschend | V-O |
| 11 | 17,5g | Mg-Salz der Methyläthylphosphinsäure<br>Dicyandiamid | 4,4g<br>3,1g | 2a | selbstverlöschend | - |
| 12 | 35 g | Äthan-1,2-di-(methylphosphinsäure)/Melamin-Addukt ([P]:[N] = 1:2)<br>Dicyandiamid<br>roter Phosphor | 7,7g<br>4,8g<br>2,5g | 2a | selbstverlöschend | V-O |
| 13 | 700 g | Äthan-1,2-di-(methylphosphinsäure)<br>Dicyandiamid<br>Melamin | 93g<br>84g<br>126g | 2b | selbstverlöschend | V-2 |
| 14 | 3,5 kg | Äthan-1,2-di-(methylphosphinsäure)/Melamin-Addukt ([P]:[N] = 1 :2)<br>Dicyandiamid | 924 g<br>576 g | 2b | selbstverlöschend | V-O |
| 15 | 3,5 kg | Methyläthylphosphinsäure/Melamin-Addukt ([P]:[N] = 1 : 1)<br>Dicyandiamid | 962 g<br>538 g | 2b | selbstverlöschend | V-2 |

Tabelle 2 : Fortsetzung

| | | | | | | |
|---|---|---|---|---|---|---|
| 16 | 1060g | Äthan-1,2-di-(methylphospinsäure)/Melamin-Addukt<br>([P]:[N] = 1 : 2)<br>Dicyandiamid | <br><br>329 g<br>126 g | 2b | selbstverlöschend | V-2 |
| 17 | 1057 g | Äthan-1,2-di-(methylphosphinsäure)<br>Melamin<br>Dicyandiamid | 138 g<br>189 g<br>126 g | 2b | selbstverlöschend | V-O |

Tabelle 3: Brandverhalten von erfindungsgemäß ausgerüstetem Polystyrol (PS)

| Beispiel | PS Menge | Flammschutzmittel Art | Menge | Prüfkörperherst. nach Beispiel | Brandprüfung nach ASTM D-635 | UL-94 |
|---|---|---|---|---|---|---|
| 18 | 17,5 g | Äthan-1,2-di-(methyl-phosphinsäure)/Guanidin-Addukt ([P] : [N]=1:2) | 7,5 g | 2a | selbstverlöschend | V-2 |
| 19 | 15 g | Mg-Salz der Methyl-äthylphosphinsäure<br>Dicyandiamid | 7,5 g<br>2,5 g | 2a | selbstverlöschend | V-O |
| 20 | 17,5g | Methyläthylphosphinsäure/Melamin-Addukt ([P] : [N] = 1 : 1)<br>Dicyandiamid<br>roter Phosphor | 5,4 g<br>1,25 g<br>1,5g | 2a | selbstverlöschend | V-O |
| 21 | 17,5 g | Mg-Salz der Methyläthylphosphinsäure<br>Dicyandiamid<br>roter Phosphor | 3,75g<br>1,25g<br>2,5g | 2a | selbstverlöschend | V-2 |
| 22 | 35 g | Äthan-1,2-di-(methyl-phosphinsäure)/Melamin-Addukt ([P]:[N]=1:2)<br>Dicyandiamid<br>roter Phosphor | 9,1 g<br>3,5 g<br>2,5 g | 2a | selbstverlöschend | V-1 |
| 23 | 1,6kg | Äthan-1,2-di-(methyl-phosphinsäure)/Melamin-Addukt ([P]:[N] =1:2)<br>Dicyandiamid<br>roter Phosphor | 241 g<br>92 g<br>67 g | 2b | selbstverlöschend | V-O |
| 24 | 1,4 kg | Äthan-1,2-di-(methyl-phosphinsäure)/Melamin-Addukt ([P[:[N]=1:2)<br>Dicyandiamid<br>roter Phosphor | 362 g<br>138 g<br>100 g | 2b | selbstverlöschend | V-O |

Tabelle 4: Brandverhalten von erfindungsgemäß ausgerüstetem Polypropylen(PP)

| Beispiel | PP Menge | Flammschutzmittel Art | Menge | Prüfkörperherst. nach Beispiel | Brandprüfung nach ASTM D-635 | UL 94 |
|---|---|---|---|---|---|---|
| 25 | 17,5 g | Mg-Salz der Methyläthylphosphinsäure<br>Dicyandiamid | 5,6 g<br>1,9 g | 2a | selbstverlöschend | — |
| 26 | 17,5 g | Äthan-1,2-di-(methylphosphinsäure)/Melamin-Addukt ([P]:[N] = 1 : 2)<br>Dicyandiamid | 5,4 g<br>2,1 g | 2a | selbstverlöschend | V-2 |
| 27 | 40 g | Äthan-1,2-di-(methylphosphinsäure)/Melamin-Addukt ([P]:[N] = 1:2)<br>Dicyandiamid<br>roter Phosphor | 5,6 g<br>2,1 g<br>2,3 g | 2a | selbstverlöschend | V-2 |
| 28 | 1,4 kg | Äthan-1,2-di-(methylphosphinsäure)/Melamin-Addukt ([P]:[N] = 1:2)<br>Dicyandiamid | 432 g<br>168 g | 2b | selbstverlöschend | V-2 |
| 29 | 1,4 kg | Mg-Salz der Methyläthylphosphinsäure<br>Dicyandiamid | 448 g<br>152 g | 2b | selbstverlöschend | — |
| 30 | 1,6 kg | Äthan-1,2-di-(methylphosphinsäure)/Melamin-Addukt ([P]:[N] = 1:2)<br>Dicyandiamid<br>roter Phosphor | 222 g<br>85 g<br>93 g | 2b | selbstverlöschend | V-2 |

Tabelle 5: Mechanische Prüfwerte

| Beispiel | Dehnung bei Reißkraft [%] | Streck-spannung [N/mm²] | Schlagzug-zähigkeit [mJ/ mm²] | Schlag-zähigkeit [mJ/mm²] | KDH [N/mm²] | E-Modul [N/mm²] | Kerbschlag-zähigkeit [mJ/mm²] |
|---|---|---|---|---|---|---|---|
| 31 | 40 | 58 | 460 | 71 | 142 | 1940 | 6,2 |
| 13 | 18 | 38 | 180 | 28 | 138 | 2010 | 2,0 |
| 14 | 25 | 40 | 140 | 17 | 152 | 1780 | 1,9 |
| 32 | 5 | 52 | 96 | 17 | 163 | 2610 | -- |
| 23 | 4 | 40 | 43 | 5 | 186 | 3080 | -- |
| 24 | 3 | 40 | 30 | 3,9 | 193 | 3470 | -- |
| 33 | 700 | 34 | 310 | 65 | 61 | 800 | 3,9 |
| 30 | 120 | 33 | 140 | 26 | 71 | 1320 | 4,4 |

PATENTANSPRÜCHE

1. Gemische, bestehend aus

1) Kohlenstoffverbindungen des Phosphors ([P]) mit den allgemeinen Formeln

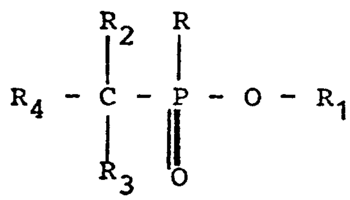

(1)

oder

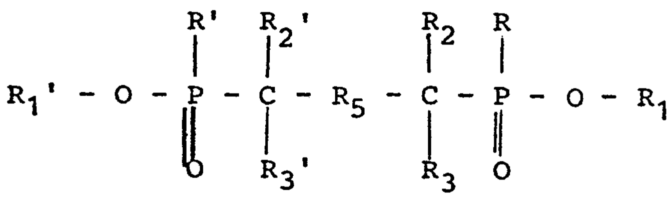

(2)

worin

R und R' jeweils eine OH-Gruppe, oder

eine $OMe^{\frac{1}{n}}$ -Gruppe, oder

eine Alkoxy-Gruppe mit 1 bis 6 C-Atomen, vorzugsweise Methoxy- oder Äthoxy-Gruppe, oder

eine geradkettige oder verzweigte Alkylgruppe mit 1 bis 6 C-Atomen, vorzugsweise Methyl- oder Äthylgruppe, oder

eine Arylgruppe mit 6 bis 10 C-Atomen, vorzugsweise Phenylgruppe, oder

eine Aralkylgruppe mit 7 bis 15 C-Atomen, vorzugsweise Benzylgruppe,

$R_1$ und $R_1'$ jeweils Wasserstoff, oder

$Me^{\frac{1}{n}}$ , oder

eine geradkettige oder verzweigte Alkylgruppe mit 1 bis 6 C-Atomen, oder

eine Aralkylgruppe mit 7 bis 15 C-Atomen,

$R_2$ und $R_2'$ jeweils Wasserstoff, oder
eine Alkylgruppe mit 1 bis 6 C-Atomen, vorzugsweise Methyl- oder Äthylgruppe,

$R_3$ und $R_3'$ jeweils Wasserstoff, oder
eine Alkylgruppe mit 1 bis 6 C-Atomen, vorzugsweise Methyl- oder Äthylgruppe,

$R_4$ Wasserstoff, oder
eine geradkettige oder verzweigte Alkylgruppe mit 1 bis 30 C-Atomen, oder
eine Aralkylgruppe mit 7 bis 30 C-Atomen, oder
eine $-R_6-COOR_7$ gruppe,

$R_5$ eine einfache chemische Bindung, oder
eine Alkylengruppe mit 1 bis 10 C-Atomen,

$R_6$ eine Alkylengruppe mit 1 bis 4 C-Atomen,

$R_7$ Wasserstoff, oder
$Me^{\frac{1}{n}}$, oder
eine Alkylgruppe mit 1 bis 6 C-Atomen,

Me ein Alkalimetall, vorzugsweise Natrium oder Kalium, oder
ein Erdalkalimetall, vorzugsweise Magnesium oder Calzium, oder
ein Erdmetall, vorzugsweise Aluminium, und

n die Wertigkeit des Metalls Me

bedeuten,
und

2) einer Stickstoffbase [N] oder einem Gemisch dieser Stickstoffbasen, nämlich Melamin und/oder Dicyandiamid und/oder Guanidin,
in einem molaren Mengenverhältnis von

[P] : [N] = 1 : 0,5 bis 1 : 6, vorzugsweise 1 : 0,7 bis 1 : 4, wenn [P] eine Verbindung der Formel (1) ist, bzw.

[P] : [N] = 1 : 1 bis 1 : 12, vorzugsweise 1 : 1,4 bis 1 : 8, wenn [P] eine Verbindung der Formel (2) ist.

2. Verwendung der Gemische gemäß Anspruch 1 als Flammschutzmittel für Kunststoffe.

3. Kunststoff-Formmasse, enthaltend ein Flammschutzmittel, dadurch gekennzeichnet, daß das Flammschutzmittel eines der Gemische gemäß Anspruch 1 ist.

Europäisches Patentamt

**EUROPÄISCHER RECHERCHENBERICHT**

0006568

Nummer der Anmeldung

EP 79 10 2070

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | GB - A - 1 480 457 (LABOFINA)<br>* Ansprüche *<br>-- | 1 |
| A | CH - A - 555 861 (HOECHST)<br>* Ansprüche *<br>-- | 1 |
| A | US - A - 3 810 862 (RONALD D. MATHIS et al.)<br>* Zusammenfassung *<br>-- | 1 |
| A | DE - A - 2 740 728 (SNIA VISCOSA)<br>* Ansprüche *<br>---- | 1 |

KLASSIFIKATION DER ANMELDUNG (Int.Cl.³)

C 08 K 5/00

RECHERCHIERTE SACHGEBIETE (Int. Cl.³)

C 08 K 5/00
C 09 K 3/28

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 01-10-1979 | LENSEN |